# EUROPEAN PATENT APPLICATION

(11) **EP 4 507 096 A1**
(43) Date of publication of application: **12.02.2025**
(21) Application number: 22952406.1
(22) Date of filing: 28.07.2022
(51) Int. Cl.: H01M 50/30, H01M 10/613

(54) **BATTERY AND ELECTRIC DEVICE**

(71) Applicant: Contemporary Amperex Technology (Hong Kong) Limited, Central, Central And Western District (HK)
(72) Inventor: CHEN, Xiaobo, Ningde, Fujian 352100 (CN); HU, Lu, Ningde, Fujian 352100 (CN); WANG, Xuehui, Ningde, Fujian 352100 (CN)
(74) Representative: Holt, Lucy Rose
(86) International application number: PCT/CN2022/108700
(87) International publication number: WO 2024/020948

(57) **Abstract**

Provided in the present application are a battery and an electric device. The battery comprises: a casing, which has an accommodating cavity; a battery cell, which is arranged in the accommodating cavity and has a first pressure relief mechanism, the first pressure relief mechanism being configured to release a substance in the battery cell; a treatment medium, which is arranged in the casing and is configured to react with the substance, so as to decrease a numerical value of a preset parameter in the substance; and a second pressure relief mechanism, which is arranged in the casing and is configured to discharge the substance, which reacts with a treatment fluid, out of the casing. By means of the battery and the electric device provided in the present application, a gaseous combustible substance released from the battery cell of the battery can be treated, thereby reducing the possibility of combustion, and achieving good safety performance.

## Description

### TECHNICAL FIELD

The present application relates to the field of batteries, in particular to a battery and an electricity consuming apparatus.

### BACKGROUND

Energy conservation and emission reduction are the key to sustainable development of the automotive industry. Electric vehicles have become an important part of the sustainable development of the automotive industry due to their advantages in energy conservation and environmental protection. For the electric vehicles, battery technologies are an important factor related to their development.

In existing batteries, after thermal runaway occurs, battery cells therein release a lot of gaseous combustibles. The gaseous combustibles are discharged out of battery systems and can be ignited by fine ignition sources to cause severe combustion or even system explosions, resulting in poor safety performance.

### SUMMARY

In view of the above problems, the present application provides a battery and an electricity consuming apparatus, where the battery can treat gaseous combustibles released from its battery cell to reduce the possibility of combustion, so as to achieve good safety performance.

In a first aspect, the present application provides a battery, including: a case having an accommodating chamber; a battery cell disposed in the accommodating chamber, where the battery cell has a first pressure relief mechanism for releasing a substance inside the battery cell; a treating medium for reacting with the substance to reduce a value of a predetermined parameter of the substance, where the treating medium is disposed in the case; and a second pressure relief mechanism for discharging the substance that has reacted with the treating medium to outside of the case, where the second pressure relief mechanism is disposed on the case.

In the technical solution of the embodiment of the present application, the battery includes a case, a battery cell, a treating medium, and a second pressure relief mechanism, where the first pressure relief mechanism of the battery cell can release a substance such as a combustible gas generated by thermal runaway inside the battery cell, and the treating medium disposed in the case can react with the substance released from the battery cell to reduce the value of the predetermined parameter of the substance, thereby reducing the value of the predetermined parameter of the substance discharged by the second pressure relief mechanism, reducing the possibility of combustion of the gaseous combustibles, and further improving the safety of a battery system.

In some embodiments, the substance includes combustible particles and/or a combustible gas, and the predetermined parameter includes at least one of a temperature of the substance, a concentration of the combustible particles, or a concentration of the combustible gas.

Due to the higher temperature of the combustible particles and/or the combustible gas, the higher concentration of the combustible particles and the higher concentration of the combustible gas, the battery provided in the embodiments of the present application is easily ignited by a fine ignition source under the participation of a combustion-supporting substance such as oxygen to cause intense combustion. The predetermined parameter includes at least one of the temperature of the substance, the concentration of the combustible particles, or the concentration of the combustible gas, so that the treating medium can react with the substance to reduce the temperature of the substance, the concentration of the combustible particles, or the concentration of the combustible gas, thereby reducing the probability of combustion.

In some embodiments, a part of the portion of the battery cell on a side away from the first pressure relief mechanism is located in the treating medium.

According to the battery provided in the embodiments of the present application, through the above setting, after the battery cell is fitted in the case, the treating medium is directly provided in the accommodating chamber, which facilitates assembly of the treating medium. In addition, the substance released through the first pressure relief mechanism can flow downwards into the treating medium and react with the treating medium under the action of gravity and other internal pressure. After the pressure in the accommodating chamber reaches a predetermined pressure, the reacted substance is discharged to the outside of the case by the second pressure relief mechanism. This setting can not only meet treating requirements for the substance released from the battery cell to reduce the value of the predetermined parameter, but also has minimal changes in the structure and assembly process of the battery.

In some embodiments, the battery further includes a divider for dividing the accommodating chamber into a first chamber and a second chamber, the divider is disposed in the case, the battery cell is disposed in the first chamber, the treating medium is disposed in the second chamber, and the first chamber is in communication with the second chamber.

The battery provided in the embodiments of the present application is provided with the divider which can divide the accommodating chamber into the first chamber and the second chamber, so that the battery cell and the treating medium can be disposed independently. The divider can provide a blocking effect on the movement of the treating medium, to avoid free shaking of the treating medium in the accommodating chamber due to vibration of the battery during transportation or operation, thereby improving the safety performance of the battery.

In some embodiments, the divider is provided with a connecting hole connecting the first chamber and the second chamber, and the first pressure relief mechanism faces the divider and is opposite to the connecting hole.

According to the battery provided in the embodiments of the present application, the divider is provided with the connecting hole connecting the first chamber and the second chamber, the first pressure relief mechanism faces the divider and is opposite to the connecting hole, and when thermal runaway occurs in the battery, the substance released from the battery cell through the first pressure relief mechanism may directly enter the second chamber through the connecting hole and react with the treating medium in the second chamber, thereby reducing the temperature of the substance and the concentration of the combustible gas and/or the combustible particles included therein.

In some embodiments, the divider includes a first division plate, the first division plate is disposed in the accommodating chamber and connected to an inner wall of the case to divide the accommodating chamber into the first chamber and the second chamber, and the battery cell is supported on the first division plate.

According to the battery provided in the embodiments of the present application, the divider includes the first division plate, so that the structure is simple, processing and connection with the case are facilitated, and effects of mounting and supporting the battery cell can be satisfied.

In some embodiments, the divider further includes a second division plate, the second division plate divides the first chamber into a first sub chamber and a second sub chamber, the first sub chamber and the second sub chamber are in communication with the second chamber respectively, the battery cell is disposed in the first sub chamber, and the second pressure relief mechanism is disposed on a wall of the second sub chamber enclosed by the case.

According to the battery provided in the embodiments of the present application, the divider in the above structural form is conducive to allowing the released substance to directly enter the second chamber and react with the treating medium before being discharged from the second sub chamber by the second pressure relief mechanism, thereby shortening the path of substance flow, avoiding re-entry of the substance that has reacted with the treating medium from the first sub chamber to the second chamber, and ensuring the reaction effect between the substance released through the first pressure relief valve and the treating medium.

In some embodiments, the first division plate intersects with the second division plate and forms an integrated structure with the second division plate.

In some embodiments, a volume of the treating medium is less than that of the second chamber.

In some embodiments, the battery further includes a sealing member, and the sealing member can switch from a first state to a second state under a predetermined pressure; in the first state, the sealing member seals the treating medium to limit the movement of the treating medium towards the battery cell; and in the second state, the sealing member releases the treating medium, so that the treating medium reacts with the substance.

In some embodiments, the sealing member includes a sealing bag film; in the first state, the treating medium is loaded and sealed within the sealing bag film; and in the second state, the sealing bag film is at least partially melted by heat, and the treating medium overflows from the sealing bag film and reacts with the substance.

According to the battery provided in the embodiments of the present application, the sealing member includes the sealing bag film, which can effectively ensure that the sealing member can switch from the first state to the second state. In addition, the structure is simple, and the treating medium can be released passively.

In some embodiments, the sealing member includes a sealing bag film and a control valve; in the first state, the control valve is closed, and the treating medium is loaded and sealed within the sealing bag film; and in the second state, the control valve is opened, and the treating medium overflows from the sealing bag film and reacts with the substance.

According to the battery provided in the embodiments of the present application, with the sealing member including the sealing bag film and the control valve, where the sealing bag film can be opened and closed by opening and closing the control valve. Therefore, active control of the sealing bag film is achieved.

In some embodiments, the case includes a case body and a cover, the case body and the cover jointly enclose the accommodating chamber, and the second pressure relief mechanism is disposed on a side wall of the case body.

According to the battery provided in the embodiments of the present application, the second pressure relief mechanism is disposed on the side wall of the case body, which is conducive to the release of the medium after the reaction between the substance and the treating medium.

In some embodiments, the treating medium is fluid.

According to the battery provided in the embodiments of the present application, the treating medium is fluid, which is conducive to the reaction with the substance, so as to reduce the temperature of the substance and the concentration of the combustible particles and/or the combustible gas.

In some embodiments, the treating medium includes at least one of ultra-pure water or fluorinated fluid.

According to the battery provided in the embodiments of the present application, the treating medium includes ultra-pure water or fluorinated fluid, which is highly inert and less prone to chemical reactions with the substance, is conducive to improving safety in the use process of the treating fluid, and can quickly vaporize after being heated to take away the heat from the substance. Meanwhile, the vaporized treating fluid can further reduce the concentration of the combustible particles or the combustible gas in the substance.

In some embodiments, the battery further includes a sealing fluid, and a density of the sealing fluid is less than that of the treating medium.

The battery provided in the embodiments of the present application includes the sealing fluid, and the density of the sealing fluid is less than that of the treating medium, so that the sealing fluid can float on the treating medium, thereby reducing volatilization loss of the treating medium and ensuring the effect of treating the substance released from the battery cell.

In some embodiments, the treating medium is solid, and the treating medium includes an oxidant.

According to the battery provided in the embodiments of the present application, the treating medium is solid, which can also meet the requirements of reaction with the substance released from the battery cell.

In a second aspect, the present application provides an electricity consuming apparatus, including the foregoing battery.

The above description is only a summary of the technical solutions of the present application. In order to understand the technical means in the present application more clearly, it can be implemented in accordance with the content of the specification; and in order to make the above and other objectives, features and advantages of the present application more obvious and easier to understand, and the specific embodiments of the present application are cited below.

### DESCRIPTION OF THE DRAWINGS

Other advantages and benefits will become apparent to those of ordinary skill in the art by reading detailed description of the preferred implementations below. The accompanying drawings are only used to illustrate the preferred implementations and are not considered as a limitation on the present application. Throughout the accompanying drawings, the same reference numerals represent the same components. In the accompanying drawings:
Fig. 1 is a schematic structural diagram of a vehicle provided in an embodiment of the present application;
Fig. 2 is a schematic structural diagram of a battery provided in an embodiment of the present application;
Fig. 3 is a cross-sectional view of the battery in the embodiment shown in Fig. 2;
Fig. 4 is an exploded structural diagram of a battery cell provided in an embodiment of the present application;
Fig. 5 is a schematic structural diagram of a battery provided in another embodiment of the present application;
Fig. 6 is a top view of a battery provided in another embodiment of the present application;
Fig. 7 is a cross-sectional view in an A-A direction in Fig 6;
Fig. 8 is a schematic structural diagram of a battery provided in still another embodiment of the present application; and
Fig. 9 is a schematic structural diagram of a battery provided in still another embodiment of the present application.

The reference numerals in the specific embodiments are as follows:
1000 - vehicle;
100 - battery; 200 - controller; 300 - motor;
10 - case; 11 - case body; 12 - cover; 13 - accommodating chamber; 131 - first chamber; 131a - first sub chamber; 131b - second sub chamber; 132 - second chamber;
20 - battery cell;
21 - shell;
22 - electrode assembly; 221 - positive electrode tab; 222 - negative electrode tab;
23 - end cover assembly; 231 - cover plate; 232 - electrode terminal;
24 - first pressure relief mechanism;
30 - treating medium;
40 - second pressure relief mechanism;
50 - divider; 51 - first division plate; 52 - second division plate; 53 - connecting hole;
60 - sealing member; 61 - sealing bag film; 62 - control valve.

### DETAILED DESCRIPTION

The embodiments of the technical solutions of the present application will be described in detail below with reference to the accompanying drawings. The following embodiments are only used to illustrate the technical solutions of the present application more clearly, and therefore are only examples and cannot be used to limit the protection scope of the present application.

It should be noted that, unless otherwise specified, the technical or scientific terms used in the embodiments of the present application shall have the ordinary meaning understood by those skilled in the art to which the embodiments of the present application belong.

In the description of the embodiments of the present application, an orientation or positional relationship indicated by the technical term "center", "longitudinal", "transverse", "length", "width", "thickness", "upper", "lower", "front", "back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In addition, the technical terms "first", "second", etc. are only for the sake of description, and cannot be understood as indicating or implying the relative importance or implicitly indicating the quantity of technical features indicated. In the description of the embodiments of the present application, the meaning of "a plurality of" is two or more, unless otherwise specifically defined.

In the description of the embodiments of the present application, unless otherwise explicitly specified and defined, the technical terms "mounted", "connected", "connection", "fixed", etc. should be understood in a broad sense, for example, the "connection" may be fixed connection, detachable connection, integration, mechanical connection, electrical connection, direct connection, indirect connection via an intermediate medium, internal communication between two elements, or interaction between two elements. Those of ordinary skill in the art may appreciate the specific meanings of the foregoing terms in the embodiments of the present application according to specific circumstances.

In the description of the embodiments of the present application, unless otherwise expressly specified and defined, a first feature "above" or "below" a second feature indicates that the first feature and the second feature are in direct contact, or are in indirect contact through an intermediate medium. Moreover, the first feature "on", "above", and "up" the second feature may be the first feature right above or obliquely above the second feature, or merely indicates that the level of the first feature is higher than that of the second feature. The first feature "below", "under", and "down" the second feature may be the first feature right below or obliquely below the second feature, or merely indicates that the level of the first feature is lower than that of the second feature.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric vehicles, as well as in various fields such as military equipment and aerospace. With the continuous expansion of the application fields of power batteries, their market demand is also increasing.

The battery mentioned in the embodiments of the present application refers to a single physical module that includes one or more battery cells to provide higher voltage and capacity. For example, the battery mentioned in the present application may include a battery module or a battery pack. The battery generally includes a case for packaging one or more battery cells. The case may avoid liquid or other foreign matters from affecting charging or discharging of the battery cell.

The inventor noticed that, when thermal runaway occurs, the battery is easily ignited by a fine ignition source to cause severe combustion or even explosion, resulting in poor safety performance. Further research by the inventor found that, when thermal runaway occurs in the battery, a large amount of gas containing a proportion of combustibles is generated in the battery cell; when the pressure in the battery cell reaches a predetermined parameter, a substance such as a gas will be released into the case of the battery through a corresponding pressure relief mechanism on the battery cell; and when the pressure in the case reaches a predetermined requirement, the substance such as the gas will be released to the outside of the battery through the pressure relief mechanism located on the case. The substance released to the outside of the battery includes a lot of combustibles, which are easily ignited by fine ignition sources under the participation of combustion-supporting substance such as oxygen to cause intense combustion and even the risk of battery explosion.

In order to alleviate the problem of poor safety performance of the battery, the inventor's research found that parameters such as temperature and concentration of the combustibles in the gas can be reduced before the gas in the case is released to the outside of the battery, thereby reducing the probability of combustion of the gas discharged by the battery and improving the safety performance of the battery.

Based on the above considerations, in order to solve the problem of poor safety performance of batteries, the inventor designed a battery by in-depth research, which includes a case, a battery cell, a treating medium, and a second pressure relief mechanism. The case has an accommodating chamber, the battery cell is disposed in the accommodating chamber, the battery cell has a first pressure relief mechanism for releasing a substance inside the battery cell. The treating medium for reacting with the substance to reduce the value of the predetermined parameter of the substance is disposed in the case. The second pressure relief mechanism for discharging the substance that has reacted with the treating medium to the outside of the case is disposed on the case.

In such a battery, the first pressure relief mechanism of the battery cell can release the substance such as the combustible gas generated by thermal runaway inside the battery cell, and the treating medium disposed in the case can react with the substance released from the battery cell to reduce the value of the predetermined parameter of the substance, thereby reducing the value of the predetermined parameter of the substance discharged by the second pressure relief mechanism, reducing the possibility of combustion of the gaseous combustibles, and further improving the safety of a battery system.

The technical solutions described in the embodiments of the present applicable are applicable to an electricity consuming apparatus using the battery. The electricity consuming apparatus may be a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the foregoing electricity consuming apparatus.

It should be understood that the technical solutions described in the embodiments of the present application are not only applicable to the electricity consuming apparatuses described above, but also applicable to all batteries including a case and electricity consuming apparatuses using the batteries. However, for brief description, the following embodiments are all described by an example of an electric vehicle.

For the convenience of description, the following embodiments are described by an example of a vehicle as an electricity consuming apparatus.

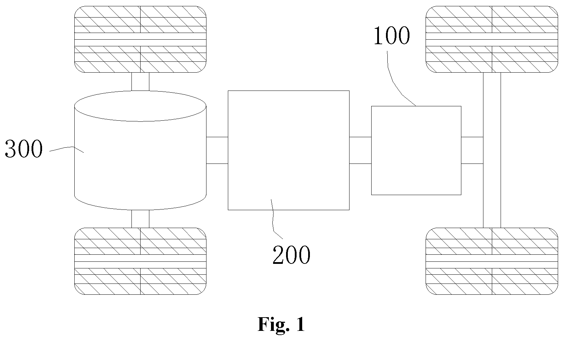

With reference to Fig. 1, a battery 100 is disposed inside a vehicle 1000, and the battery 100 may be disposed at the bottom, head, or tail of the vehicle 1000. The battery 100 may be used for supplying power to the vehicle 1000. For example, the battery 100 may be used as an operation power supply of the vehicle 1000.

The vehicle 1000 may further include a controller 200 and a motor 300. The controller 200 is used to control the battery 100 to supply power to the motor 300, for example, for an operating power demand of the vehicle 1000 during startup, navigation and running.

In some embodiments, the battery 100 may be used not only as an operation power supply of the vehicle 1000, but also as a driving power supply of the vehicle 1000 to replace or partially replace fuel or natural gas to provide driving power for the vehicle 1000.

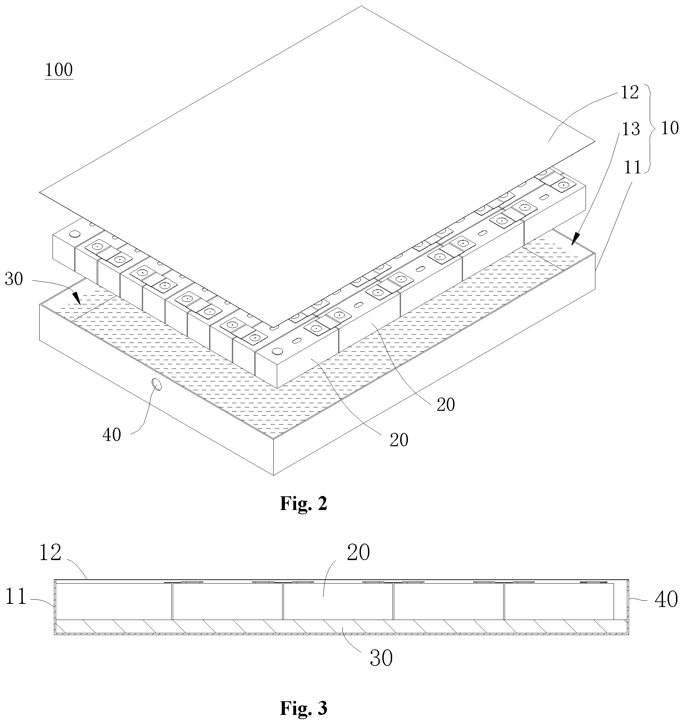

With reference to Fig. 2 and Fig. 3, the battery 100 includes a case 10, a battery cell 20, a treating medium 30, and a second pressure relief mechanism 40. The case 10 has an accommodating chamber 13, the battery cell 20 is disposed in the accommodating chamber 13, the battery cell 20 has a first pressure relief mechanism 24 for releasing a substance inside the battery cell 20. The treating medium 30 or reacting with the substance to reduce the value of the predetermined parameter of the substance is disposed in the case 10. The second pressure relief mechanism 40 for discharging the substance that has reacted with the treating medium to the outside of the case 10 is disposed on the case 10.

Optionally, the case 10 is used for providing a sealed space for the battery cell 20, and the case 10 may be in various shapes, such as cylindrical or cuboid. In Fig. 2, for example, the case 10 is cuboid.

In some embodiments, as shown in Fig. 2 and Fig. 3, the case 10 may include a case body 11 and a cover 12, and the case body 11 and the cover 12 cover each other to confine an accommodating chamber 13 for accommodating the battery cell 20. The case body 11 may be of a hollow structure with an open side, the cover 12 may also be of a hollow structure with an open side, and the open side of the cover 12 fits on the open side of the case body 11 to form the case 10 with the sealed space. Alternatively, the case body 11 may be of a hollow structure with an open side, the cover 12 may be of a flat plate structure, and the two fit together.

There may be one or more battery cells 20 in the battery. If there is a plurality of battery cells 20, the plurality of battery cells 20 may be connected in series, in parallel, or in hybrid. The hybrid connection refers to a combination of series connection and parallel connection in the plurality of battery cells 20. The plurality of battery cells 20 may be directly connected in series, in parallel, or in hybrid together, and then the whole formed by the plurality of battery cells 20 is accommodated in the case 10. Alternatively, the plurality of battery cells 20 may first be connected in series, in parallel, or in hybrid to form a battery module, and then a plurality of battery modules may be connected in series, in parallel, or in hybrid to form a whole accommodated in the case 10. The battery cells 20 may be cylindrical, flat, cuboid, or in other shapes.

In some embodiments, the battery 100 may further include a busbar, and the plurality of battery cells 20 may be electrically connected through the busbar to implement the series, parallel, or hybrid connection of the plurality of battery cells 20. Taking two battery cells 20 connected in series as an example, a positive electrode terminal of one battery cell 20 is connected to a negative electrode terminal of the other battery cell 20 through the busbar to achieve series connection of the two battery cells 20.

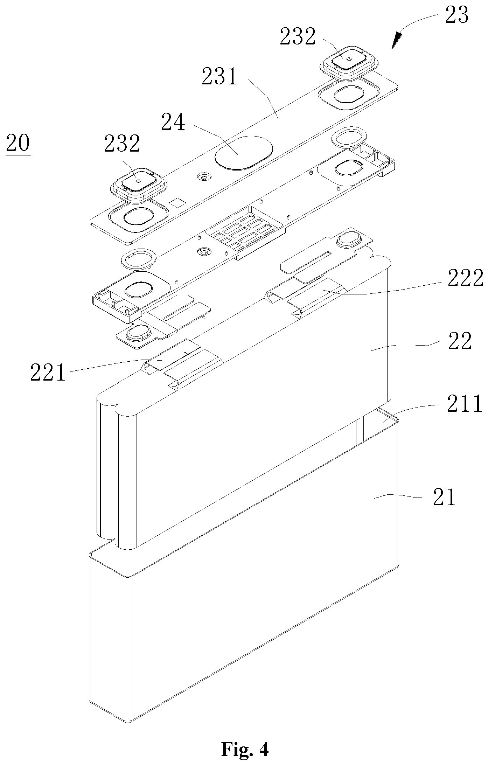

With reference to Fig. 4, the battery cell 20 may include a shell 21, an electrode assembly 22, an end cover assembly 23, and a first pressure relief mechanism, where the shell 21 has an opening 211, the electrode assembly 22 is accommodated in the shell 21, the end cover assembly 23 includes a cover plate 231 for covering the opening 211 and an electrode terminal 232 for being electrically connected to the electrode assembly 22.

The material of the shell 21 may be various, such as copper, iron, aluminum, stainless steel, or aluminum alloy, which is not specially limited by the embodiments of the present application.

The shell 21 may be in various shapes, such as cylindrical or cuboid. The shape of the shell 21 may be determined according to a specific shape of the electrode assembly 22. For example, if the electrode assembly 22 is of a cylindrical structure, the shell 21 may be of a cylindrical structure; or if the electrode assembly 22 is of a cuboid structure, the shell 21 may be of a cuboid structure. In Fig. 4, for example, both the shell 21 and the electrode assembly 22 are of cuboid structures.

The electrode assembly 22 may include a positive electrode plate, a negative electrode plate, and a separator. In some embodiments, the electrode assembly 22 may be of a wound structure formed by winding the positive electrode plate, the separator, and the negative electrode plate. In other embodiments, the electrode assembly 22 may be of a laminated structure formed by laminating the positive electrode plate, the separator, and the negative electrode plate.

In some embodiments, the electrode assembly 22 may further include tabs, specifically including a positive electrode tab 221 and a negative electrode tab 222. A portion of a positive electrode current collector not coated with a positive electrode active material layer in the positive electrode plate may be used as the positive electrode tab 221, and a portion of a negative electrode current collector not coated with a negative electrode active material layer in the negative electrode plate may be used as the negative electrode tab 222.

In the embodiments of the present application, the cover plate 231 of the end cover assembly 23 is used for covering the opening 211 of the shell 21 to form a sealed space (not shown) for accommodating the battery cell 20. The sealed space is further used for accommodating an electrolyte, such as an electrolytic solution. The electrode terminal 232 of the end cover assembly 23 serves as a component for outputting electrical energy of the electrode assembly 22, and the electrode terminal 232 is used for being electrically connected to the electrode assembly 22, that is, the electrode terminal 232 is electrically connected to the tab of the electrode assembly 22.

Optionally, the first pressure relief mechanism 24 may be disposed on the cover plate 231 of the end cover assembly 23, or disposed on the shell 21. When disposed on the shell 21, the first pressure relief mechanism may be disposed on a bottom wall of the shell 21.

Optionally, the first pressure relief mechanism 24 may be in a form of a pressure relief valve, or the first pressure relief mechanism 24 may be an indentation or the like disposed on the cover plate 231 or the shell 21.

Optionally, the second pressure relief mechanism 24 may be in a form of a pressure relief valve, or the first pressure relief mechanism 24 may be an indentation or the like disposed on the case 10.

Optionally, the substance released from the battery cell 20 may be a gas substance containing a combustible component.

Optionally, the treating medium 30 may be a fluid medium or a solid medium.

Optionally, the treating medium 30 may be directly disposed in the case 10 to be in contact with an inner wall surface of the case 10, and the substance released from the battery cell 20 may directly react with the treating medium in the accommodating chamber 13 to reduce the value of the predetermined parameter of the substance released from the battery cell 20. Of cause, in some examples, the treating medium 30 may be distributed in an independent treating space connected to the first pressure relief mechanism 24, and the treating space is located in the case body 11 and supported by other components such as a container. The substance released from the battery cell 20 through the first pressure relief mechanism 24 may enter a release space connected thereto, react with the treating medium, then be discharged from the release space into the accommodating chamber of the battery, and finally be discharged to the outside of the battery 100 by the second pressure relief mechanism 40. In some other examples, the treating medium 30 may be disposed in a sealed structure which may be located inside the accommodating chamber 13 and equipped with an active opening switch. When thermal runaway occurs in the battery 100, the switch on the structure is opened, and the treating medium 30 overflows from the sealed structure to soak the treating space. Alternatively, the structure may use a material with a low melting point to wrap the treating medium 30, and the material is passively melted at a high temperature of thermal runaway of the battery 100, so that the treating medium 30 overflows from the sealed structure to soak the treating space.

Optionally, the reaction between the treating medium 30 and the substance may be understood as chemical and/or physical reactions between the two. Optionally, part of the combustible in the substance discharged from the battery cell 20 may react with the treating medium 30 to generate a substance with reduced flammability, thereby reducing the concentration of the combustibles. Alternatively or additionally, the treating medium 30 may exchange heat with the substance to reduce the temperature of the combustibles, which may also be understood as the reaction between the treating medium 30 and the substance.

Optionally, the substance may include combustible particles, dust, gas, etc. The predetermined parameter may include temperature of the substance, concentration of the combustible gas, concentration of the combustible particles, weight ratio of the combustible gas, weight ratio of the combustible particles, etc.

The battery 100 provided in the embodiments of the present application includes a case 10, a battery cell 20, a treating medium 30, and a second pressure relief mechanism 40, where the first pressure relief mechanism 24 of the battery cell 20 can release a substance such as a combustible gas generated by thermal runaway inside the battery cell 20, the treating medium 30 is disposed in the case 10, and the treating medium 30 can react with the substance released from the battery cell 20 to reduce the value of the predetermined parameter of the substance, thereby reducing the value of the predetermined parameter of the substance discharged by the second pressure relief mechanism 40, reducing the possibility of combustion of the gaseous combustibles, and further improving the safety of a battery system.

In some embodiments, the substance includes the combustible particles and/or the combustible gas, and the predetermined parameter includes at least one of a temperature of the substance, a concentration of the combustible particles, or a concentration of the combustible gas.

Optionally, the substance may include only the combustible particles or the combustible gas, or include both the combustible particles and the combustible gas.

Optionally, the temperature of the substance may be understood as an overall temperature formed by all components such as the combustible particles and the combustible gas included in the substance.

Optionally, the predetermined parameter may include one of a temperature of the substance, a concentration of the combustible particles, and a concentration of the combustible gas, or a combination of two, or the three.

Due to the higher temperature of the combustible particles and/or the combustible gas, the higher concentration of the combustible particles and the higher concentration of the combustible gas, the battery provided in the embodiments of the present application is easily ignited by a fine ignition source under the participation of a combustion-supporting substance such as oxygen to cause intense combustion. The predetermined parameter includes at least one of the temperature of the substance, the concentration of the combustible particles, or the concentration of the combustible gas, so that the treating medium 30 can react with the substance to reduce the temperature of the substance, the concentration of the combustible particles, or the concentration of the combustible gas, thereby reducing the probability of combustion.

With continued reference to Fig. 2 and Fig .3, in some optional embodiments, a part of the battery cell 20 on a side away from the first pressure relief mechanism 24 is located in the treating medium 30.

Optionally, the treating medium 30 may be directly disposed in the accommodating chamber. The battery cell 20 is provided in the accommodating chamber and partially located in the treating medium 30. For example, when the treating medium 30 is fluid, the side, away from the first pressure relief mechanism 24, of the battery cell 20 is located in the treating medium 30.

According to the battery provided in the embodiments of the present application, through the above setting, after the battery cell 20 is fitted in the case 10, the treating medium 30 is directly provided in the accommodating chamber 13, which facilitates assembly of the treating medium 30. In addition, the substance released through the first pressure relief mechanism 24 can flow downwards into the treating medium 30 under the action of gravity and other internal pressure to react with the treating medium 30. After the pressure in the accommodating chamber 13 reaches a predetermined pressure, the reacted substance is discharged to the outside of the case 10 by the second pressure relief mechanism 40. This setting can not only meet treating requirements for the substance released from the battery cell 20 to reduce the value of the predetermined parameter, but also has just relatively slight changes in the structure and assembly process of the battery.

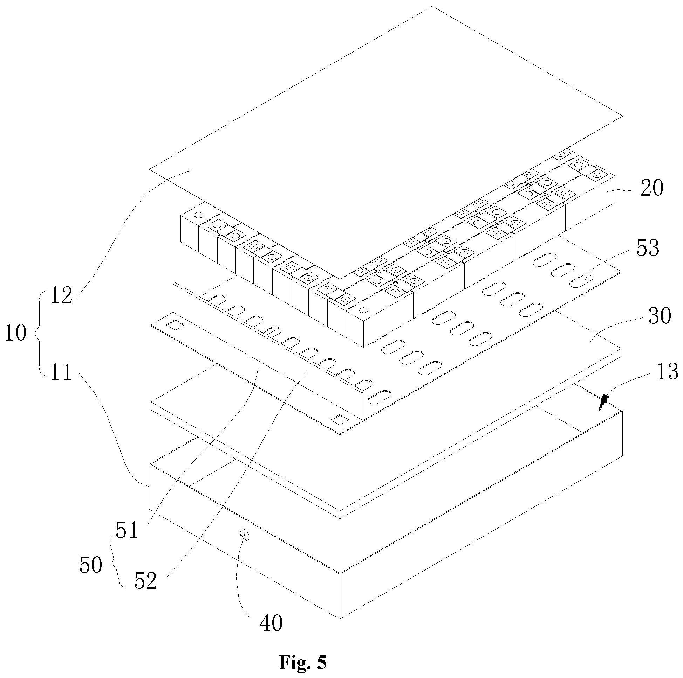

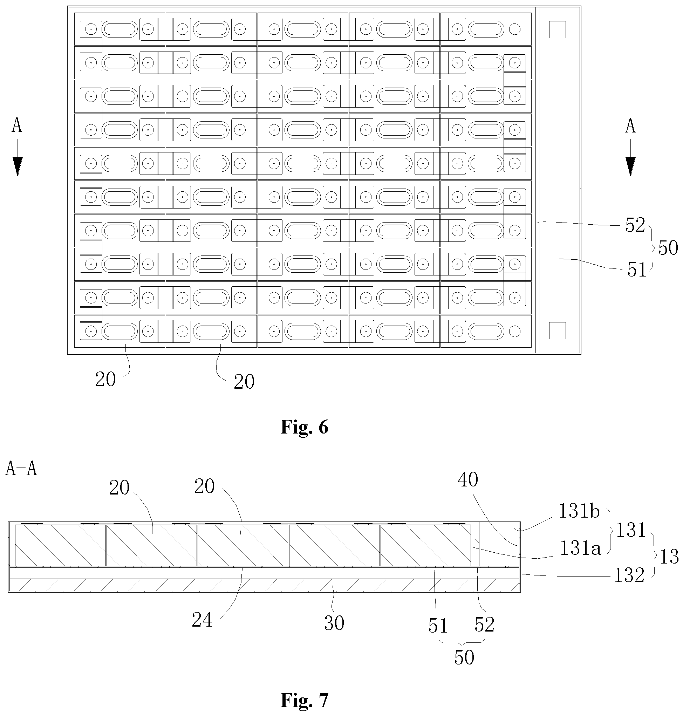

With reference to Fig. 5 to Fig. 7, in some optional embodiments, the battery 100 provided in the embodiments of the present application further includes a divider 50 for dividing the accommodating chamber 13 into a first chamber 131 and a second chamber 132, the divider 50 is disposed in the case 10, the battery cell 20 is disposed in the first chamber 131, the treating medium 30 is disposed in the second chamber 132, and the first chamber 131 is in communication with the second chamber 132.

Optionally, the divider 50 may be a plate structure, and the divider 50 may divide the accommodating chamber 13 horizontally or longitudinally to form the first chamber 131 and the second chamber 132.

For example, the divider 50 may divide the accommodating chamber 13 longitudinally to form the first chamber 131 and the second chamber 132. Optionally, the second chamber 132 may be located below the first chamber 131.

The battery provided in the embodiments of the present application is provided with the divider 50, and the divider 50 can divide the accommodating chamber 13 into the first chamber 131 and the second chamber 132, so that the battery cell 20 and the treating medium 30 can be disposed independently. The divider 50 can provide a blocking effect on the movement of the treating medium 30, to avoid free shaking of the treating medium 30 in the accommodating chamber 13 due to vibration of the battery 100 during transportation or operation, thereby improving the safety performance of the battery 100.

In some optional embodiments, the divider 50 is provided with a connecting hole 53 connecting the first chamber 131 and the second chamber 132, and the first pressure relief mechanism 24 faces the divider 50 and is opposite to the connecting hole 53.

Optionally, the number of the connecting hole 53 may be two or more. Optionally, the number of connecting holes 53 may be equal to the number of battery cells 20, or the number of connecting holes 53 may be greater than the number of battery cells 20. The first pressure relief mechanism 24 of each battery cell 20 may be opposite to one of the connecting holes 53.

Optionally, the shape of the connecting hole 53 may match the shape of the first pressure relief mechanism 24. Optionally, the size of the connecting hole 53 may be larger than that of the first pressure relief mechanism 24.

According to the battery provided in the embodiments of the present application, the divider 50 is provided with the connecting hole 53 connecting the first chamber 131 and the second chamber 132, the first pressure relief mechanism 24 faces the divider 50 and is opposite to the connecting hole 53, and when thermal runaway occurs in the battery 100, the substance released through the first pressure relief mechanism 24 in the battery cell 20 may directly enter the second chamber 132 through the connecting hole 53 and react with the treating medium 30 in the second chamber 132, thereby reducing the temperature of the substance and the concentration of the combustible gas and/or the combustible particles included therein.

In some optional embodiments, the divider 50 includes a first division plate 51, the first division plate 51 is disposed in the accommodating chamber 13 and connected to an inner wall of the case 10 to divide the accommodating chamber 13 into the first chamber 131 and the second chamber 132, and the battery cell 20 is supported on the first division plate 51.

Optionally, the first division plate 51 may be a flat plate structure, and an outer wall surface of the first division plate 51 may be connected to a side wall surface of the accommodating chamber 13 enclosed by the case 10 by welding, or an integrated structure may be used.

According to the battery 100 provided in the embodiments of the present application, the divider 50 includes the first division plate 51, so that the structure is simple, processing and connection with the case 10 are facilitated, and effects of mounting and supporting the battery cell 20 can be satisfied.

In some optional embodiments, the divider 50 further includes a second division plate 52, the second division plate 52 divides the first chamber 131 into a first sub chamber 131a and a second sub chamber 131b, the first sub chamber 131a and the second sub chamber 131b are in communication with the second chamber 132 respectively, the battery cell 20 is disposed in the first sub chamber 131a, and the second pressure relief mechanism 40 is disposed on a wall of the second sub chamber 131b enclosed by the case 10.

Optionally, the second division plate 52 and the first division plate 51 may be connected to each other or abut against each other.

Optionally, a volume of the first sub chamber 131a may be greater than that of the second sub chamber 131b. Therefore, the capacity of loading battery cells 20 can be increased.

Optionally, the first sub chamber 131a and the second sub chamber 131b are each in communication with the second chamber 132, and the first sub chamber 131a and the second sub chamber 131b may not be in communication with each other.

Optionally, the second pressure relief mechanism 40 is disposed on a wall of the second sub chamber 131b enclosed by the case 10, which may be understood as the outside can be in communication with the second sub chamber 131b when the second pressure relief mechanism 40 is opened.

According to the battery provided in the embodiments of the present application, the divider 50 further includes the second division plate 52 which divides the first chamber 131 into the first sub chamber 131a and the second sub chamber 131b, so that the substance released from the battery cell 20 through the first pressure relief mechanism 24 may directly enter the second chamber 132 through the connecting hole 53, react with the treating medium 30 in the second chamber 132 to reduce the temperature of the substance and the concentration of the combustibles, and enter the second sub chamber 131b. When the second pressure relief mechanism 40 is opened, the substance that has reacted with the treating medium 30 is discharged from the second sub chamber 131b to the outside of the battery 100 through the second pressure relief mechanism 40. The divider 50 in the above structural form is conducive to allowing the released substance to directly enter the second chamber 132 and react with the treating medium 30 before being discharged from the second sub chamber 131b through the second pressure relief mechanism 40, thereby shortening the path of substance flow, avoiding re-entry of the substance that has reacted with the treating medium 30 from the first sub chamber 131a into the second chamber 132, and ensuring the reaction effect between the substance released through the first pressure relief valve and the treating medium 30.

In some optional embodiments, the first division plate 51 intersects with the second division plate 52 and forms an integrated structure with the second division plate 52.

Optionally, an angle between the first division plate 51 and the second division plate 52 may be less than 90° or equal to 90°.

Optionally, the first division plate 51 and the second division plate 52 may be integrally formed by casting or the like.

According to the battery 100 provided in the embodiments of the present application, the first division plate 51 intersects with the second division plate 52, which is conducive to the formation of the first sub chamber 131a and the second sub chamber 131b. Moreover, the first division plate 51 forms an integrated structure with the second division plate 52, which can ensure the connection strength between the first division plate 51 and the second division plate 52 and facilitates overall mounting of the divider 50.

In some optional embodiments, a volume of the treating medium 30 is less than that of the second chamber 132.

Optionally, after the second chamber 132 is loaded with the treating medium 30, there is still remaining space, that is, the second chamber 132 is not fully loaded with the treating medium 30.

According to the battery 100 provided in the embodiments of the present application, the volume of the treating medium 30 is less than that of the second chamber 132, so that the substance released from the battery cell 20 enter the second chamber 132 to react with the treating medium 30.

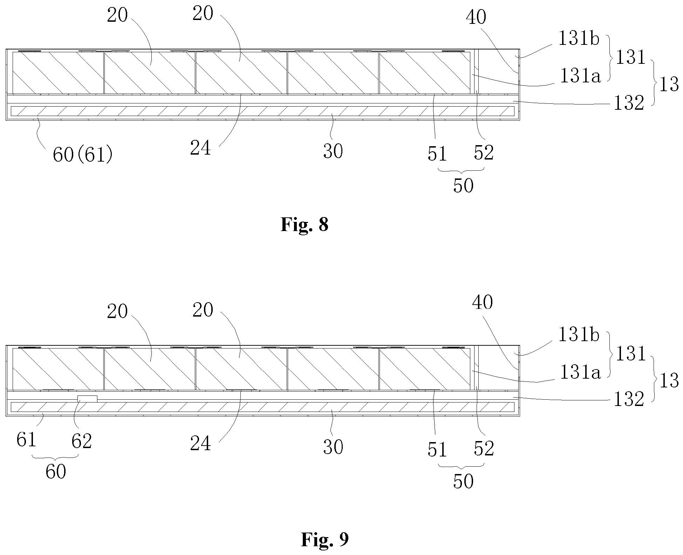

With reference to Fig. 8 and Fig. 9, in some optional embodiments, the battery 100 further includes a sealing member 60, and the sealing member 60 can switch from a first state to a second state under a predetermined pressure; in the first state, the sealing member 60 seals the treating medium 30 to limit the movement of the treating medium 30 towards the battery cell 20; and in the second state, the sealing member 60 releases the treating medium 30, so that the treating medium 30 reacts with the substance.

Optionally, in the first state, the sealing member 60 may be enclosed, the treating medium 30 may be enclosed within the sealing member 60, cannot move freely, and will not come into contact with other components such as the battery cell 20. In the second state, the sealing member 60 releases the treating medium 30, so that the treating medium 30 is released from the sealing member 60 to react with the substance.

Optionally, the sealing member 60 may be switched from the first state to the second state actively or passively.

The battery provided in the embodiment of the present application is equipped with the sealing member 60, and the sealing member 60 can switch between the first state and the second state, where the sealing member 60 is in the first state when thermal runaway does not occur in the battery 100, and the treating medium 30 is sealed by the sealing member 60 and cannot move freely; and when thermal runaway occurs in the battery and the battery cell 20 releases the substance, the sealing member 60 can be switched from the first state to the second state, so that the treating medium 30 is released to react with the substance released from the battery cell 20, thereby reducing the temperature of the substance and the concentration of the combustible particles and/or the combustible gas.

As shown in Fig. 8, in some optional embodiments, in the battery 100 provided in the embodiments of the present application, the sealing member 60 includes a sealing bag film 61; in the first state, the treating medium 30 is loaded and sealed within the sealing bag film 61; and in the second state, the sealing bag film 61 is at least partially melted by heat, and the treating medium 30 overflows from the sealing bag film 61 and reacts with the substance.

Optionally, in the first state, the sealing bag film 61 may be in a fully sealed state; and in the second state, the sealing bag film 61 is melted by heat and broken, so that the treating medium 30 can overflow from the sealing bag film 61 and react with the substance.

Optionally, a melting point T of the sealing bag film 61 may satisfy: 70°C ≤ T ≤ 200°C. The sealing bag film 61 separates the treating medium 30 from the accommodating chamber 13. The sealing bag film 61 may be in various shapes such as a sheet, a hollow block, or a column, which are not limited here and can be selected according to specific needs.

Optionally, when the divider 50 is included, the sealing member 60 and the divider 50 may be connected by bonding, or abutting, clamping and limiting, or may not be connected. Optionally, the material of the sealing bag film 61 may include at least one of polypropylene, polyethylene terephthalate, or polyvinyl chloride. Alternatively, the material of the sealing bag film 61 may include other materials such as plastics, as long as it can satisfy the above melting point range.

According to the battery 100 provided in the embodiments of the present application, the sealing member 60 includes the sealing bag film 61, which can effectively ensure that the sealing member 60 can switch from the first state to the second state. In addition, the structure is simple, and the treating medium 30 can be released passively.

It may be understood that the sealing bag film 61 is opened passively in the above embodiments, which is an optional implementation, but is not limited thereto. In some implementations, the sealing bag film 61 may be opened actively.

As shown in Fig. 9, in some optional embodiments, the sealing member 60 includes a sealing bag film 61 and a control valve 62; in the first state, the control valve 62 is closed, and the treating medium 30 is loaded and sealed within the sealing bag film 61; and in the second state, the control valve 62 is opened, and the treating medium 30 overflows from the sealing bag film 61 and reacts with the substance.

Optionally, the sealing bag film 61 may be provided with an opening, and the control valve 62 is disposed at the opening to control the opening or closing of the opening.

Optionally, the control valve 62 may be an electromagnetic valve. The sealing member 60 can be switched between the first state and the second state by controlling the opening and closing of the electromagnetic valve.

According to the battery provided in the embodiments of the present application, with the sealing member 60 including the sealing bag film 61 and the control valve 62, the sealing bag film 61 can be opened and closed by opening and closing the control valve 62. Therefore, active control of the sealing bag film 61 is achieved.

In some optional embodiments, in the battery 100 provided in the embodiments of the present application, the case 10 includes a case body 11 and a cover 12, the case body 11 and the cover 12 jointly enclose the accommodating chamber 13, and the second pressure relief mechanism 40 is disposed on a side wall of the case body 11.

Optionally, the case body 11 may be rectangular or cylindrical, and the second pressure relief mechanism 40 may be disposed on the side wall of the case body 11.

According to the battery 100 provided in the embodiments of the present application, the second pressure relief mechanism 40 is disposed on the side wall of the case body 11, which is conducive to the release of the medium after the reaction between the substance and the treating medium 30.

In some optional embodiments, in the battery 100 provided in the embodiments of the present application, the treating medium 30 is fluid.

According to the battery provided in the embodiments of the present application, the treating medium 30 is fluid, which is conducive to the reaction with the substance, so as to reduce the temperature of the substance and the concentration of the combustible particles and/or the combustible gas.

In some embodiments, the treating medium 30 includes at least one of ultra-pure water or fluorinated fluid.

Optionally, the treating medium 30 may include ultra-pure water or fluorinated fluid, and include both ultra-pure water and fluorinated fluid.

According to the battery 100 provided in the embodiments of the present application, the treating medium 30 includes ultra-pure water or fluorinated fluid, which is highly inert and less prone to chemical reactions with the substance so as to be conducive to improving safety in the use process of the treating medium, and can quickly vaporize to take away the heat from the substance after being heated. Meanwhile, the vaporized treating medium can further reduce the concentration of the combustible particles or the combustible gas in the substance.

In some optional embodiments, the battery 100 provided in the embodiments of the present application further includes a sealing fluid, and a density of the sealing fluid is less than that of the treating medium 30.

Optionally, the sealing fluid may be sealed with a non-volatile fluid, such as silicone oil.

The battery provided in the embodiments of the present application includes the sealing fluid, and the density of the sealing fluid is less than that of the treating medium 30, so that the sealing fluid can float on the treating medium 30, thereby reducing volatilization loss of the treating medium 30 and ensuring the effect of treating the substance released from the battery cell 20.

It may be understood that the battery 100 provided in the above embodiments of the present application is illustrated by the fluid treating medium 30 as an example, which is an optional implementation, but is not limited thereto. In some embodiments, the treating medium 30 may be solid, and the treating medium 30 includes an oxidant, such as copper oxide.

According to the battery provided in the embodiments of the present application, the treating medium 30 is solid, which can also meet the requirements of reaction with the substance released from the battery cell 20.

According to some embodiments of the present application, the present application further provides an electricity consuming apparatus, including the battery for providing electrical energy for the electricity consuming apparatus as described in any of the above solutions. The electricity consuming apparatus may be any of the foregoing devices or systems using the battery.

The electricity consuming apparatus provided in the embodiments of the present application includes the battery 100 provided in each of the foregoing embodiments, the treating medium 30 is disposed in the case 10 of the battery 100, and the treating medium 30 can react with the substance released from the battery cell 20 to reduce the value of the predetermined parameter of the substance, thereby reducing the value of the predetermined parameter of the substance discharged by the second pressure relief mechanism 40, reducing the possibility of combustion of the gaseous combustibles, and further improving the safety of the electricity consuming apparatus.

As shown in Fig. 5, the battery 100 provided in the embodiments of the present application includes a case 10, a battery cell 20, a treating medium 30, a second pressure relief mechanism 40, and a divider 50. The case 10 has an accommodating chamber 13, the battery cell 20 is disposed in the accommodating chamber 13, and the battery cell 20 has a first pressure relief mechanism 24 for releasing a substance inside the battery cell 20. The treating medium 30 for reacting with the substance to reduce the value of the predetermined parameter of the substance is disposed in the case 10. The second pressure relief mechanism 40 for discharging the substance that has reacted with the treating medium to the outside of the case 10 is disposed on the case 10. The case 10 is square, the substance includes the combustible particles and/or the combustible gas, the predetermined parameter includes at least one of a temperature of the substance, a concentration of the combustible particles, or a concentration of the combustible gas, and the treating medium 30 is fluid. The divider 50 for dividing the accommodating chamber 13 into a first chamber 131 and a second chamber 132 is disposed in the case 10, the battery cell 20 is disposed in the first chamber 131, the treating medium 30 is disposed in the second chamber 132, and the first chamber 131 is in communication with the second chamber 132. The divider 50 is provided with a connecting hole 53 connecting the first chamber 131 and the second chamber 132, and the first pressure relief mechanism 24 faces the divider 50 and is opposite to the connecting hole 53. The divider 50 includes a first division plate 51 and a second division plate 52, the first division plate 51 is disposed in the accommodating chamber 13 and connected to an inner wall of the case 10 to divide the accommodating chamber 13 into the first chamber 131 and the second chamber 132, the battery cell 20 is supported on the first division plate 51, the second division plate 52 divides the first chamber 131 into a first sub chamber 131a and a second sub chamber 131b, the first sub chamber 131a and the second sub chamber 131b are in communication with the second chamber 132 respectively, the battery cell 20 is disposed in the first sub chamber 131a, and the second pressure relief mechanism 40 is disposed on a wall of the second sub chamber 131b enclosed by the case 10.

Finally, it should be noted that the foregoing embodiments are only used to describe, but not to limit, the technical solutions of the present application. Although the present application is described in detail with reference to the foregoing embodiments, those of ordinary skill in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims and specification of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A battery, comprising:
a case having an accommodating chamber;
a battery cell disposed in the accommodating chamber, wherein the battery cell comprises a first pressure relief mechanism for releasing a substance inside the battery cell;
a treating medium for reacting with the substance to reduce a value of a predetermined parameter of the substance, wherein the treating medium is disposed in the case; and
a second pressure relief mechanism for discharging the substance that has reacted with the treating medium to outside of the case, wherein the second pressure relief mechanism is disposed on the case.

2. The battery according to claim 1, wherein the substance comprises combustible particles and/or a combustible gas, and the predetermined parameter comprises at least one of a temperature of the substance, a concentration of the combustible particles, or a concentration of the combustible gas.

3. The battery according to claim 1 or 2, wherein a part of the battery cell on a side away from the first pressure relief mechanism is located in the treating medium.

4. The battery according to claim 1 or 2, wherein the battery further comprises a divider for dividing the accommodating chamber into a first chamber and a second chamber, the divider is disposed in the case, the battery cell is disposed in the first chamber, the treating medium is disposed in the second chamber, and the first chamber is in communication with the second chamber.

5. The battery according to claim 4, wherein the divider is provided with a connecting hole connecting the first chamber and the second chamber, and the first pressure relief mechanism faces the divider and is opposite to the connecting hole.

6. The battery according to claim 5, wherein the divider comprises a first division plate, the first division plate is disposed in the accommodating chamber and connected to an inner wall of the case to divide the accommodating chamber into the first chamber and the second chamber, and the battery cell is supported on the first division plate.

7. The battery according to claim 6, wherein the divider further comprises a second division plate, the second division plate divides the first chamber into a first sub chamber and a second sub chamber, the first sub chamber and the second sub chamber are in communication with the second chamber respectively, the battery cell is disposed in the first sub chamber, and the second pressure relief mechanism is disposed on a wall of the second sub chamber enclosed by the case.

8. The battery according to claim 7, wherein the first division plate intersects with the second division plate and forms an integrated structure with the second division plate.

9. The battery according to any one of claims 4 to 8, wherein a volume of the treating medium is less than a volume of the second chamber.

10. The battery according to any one of claims 1 to 9, wherein the battery further comprises a sealing member, and the sealing member can switch from a first state to a second state under a predetermined pressure;
in the first state, the sealing member seals the treating medium to limit the movement of the treating medium towards the battery cell; and
in the second state, the sealing member releases the treating medium, so that the treating medium reacts with the substance.

11. The battery according to claim 10, wherein the sealing member comprises a sealing bag film; in the first state, the treating medium is loaded and sealed within the sealing bag film; and in the second state, the sealing bag film is at least partially melted by heat, and the treating medium overflows from the sealing bag film and reacts with the substance.

12. The battery according to claim 10, wherein the sealing member comprises a sealing bag film and a control valve; in the first state, the control valve is closed, and the treating medium is loaded and sealed within the sealing bag film; and in the second state, the control valve is opened, and the treating medium overflows from the sealing bag film and reacts with the substance.

13. The battery according to any one of claims 1 to 12, wherein the case comprises a case body and a cover, the case body and the cover jointly enclose the accommodating chamber, and the second pressure relief mechanism is disposed on a side wall of the case body.

14. The battery according to any one of claims 1 to 13, wherein the treating medium is fluid.

15. The battery according to claim 14, wherein the treating medium comprises at least one of ultra-pure water or fluorinated fluid.

16. The battery according to any one of claim 14, wherein the battery further comprises a sealing fluid, and a density of the sealing fluid is less than a density of the treating medium.

17. The battery according to any one of claims 1 to 13, wherein the treating medium is solid, and the treating medium comprises an oxidant.

18. An electricity consuming apparatus, comprising the battery according to any one of claims 1 to 17.
